# EUROPÄISCHE PATENTSCHRIFT

(11) **EP 1 317 791 B1**
(45) Veröffentlichungstag und Bekanntmachung des Hinweises auf die Patenterteilung: **26.07.2006**
(21) Anmeldenummer: 01967308.6
(22) Anmeldetag: 04.09.2001
(51) Int. Cl.: H02M 1/00

(54) **STEUER- UND REGELVERFAHREN FÜR EINEN DREIPUNKT-STROMRICHTER MIT AKTIVEN KLEMMSCHALTERN SOWIE VORRICHTUNG HIERZU**
CONTROLLING AND REGULATING METHOD FOR A THREE-LEVEL POWER CONVERTER HAVING ACTIVE CLAMPING SWITCHES, AND A DEVICE THEREFOR
PROCEDE DE COMMANDE ET DE REGULATION POUR UN CONVERTISSEUR DE COURANT EN MONTAGE HARTLEY A INTERRUPTEURS DE VERROUILLAGE ACTIFS, ET DISPOSITIF Y RELATIF

(30) Priorität: 13.09.2000 DE 10045208; 20.08.2001 DE 10140747
(43) Veröffentlichungstag der Anmeldung: 11.06.2003
(73) Patentinhaber: ABB RESEARCH LTD., 8050 Zürich (CH)
(72) Erfinder: BERNET, Steffen, 69245 Bammental (DE); BRÜCKNER, Thomas, 01809 Heidenau (DE)
(74) Vertreter: Miller, Toivo
(86) Internationale Anmeldenummer: PCT/EP2001/010141
(87) Internationale Veröffentlichungsnummer: WO 2002/023703

(56) Entgegenhaltungen:
- DE-A- 4 127 706
- GB-A- 2 293 503
- KAKU B ET AL: "Switching loss minimised space vector PWM method for IGBT three-level inverter" IEE PROCEEDINGS: ELECTRIC POWER APPLICATIONS, INSTITUTION OF ELECTRICAL ENGINEERS, GB, Bd. 144, Nr. 3, 13. Mai 1997 (1997-05-13), Seiten 182-190, XP006008606 ISSN: 1350-2352
- ROBINSON ET AL: "The effect of thermal performance on device current utilisation" POWER ELECTRONICS SPECIALISTS CONFERENCE, PESC '94 RECORD., 25TH ANNUAL IEEE TAIPEI, TAIWAN 20-25 JUNE 1994, NEW YORK, NY, USA,IEEE, 20. Juni 1994 (1994-06-20), Seiten 427-433, XP010121217 ISBN: 0-7803-1859-5
- WONG ET AL: "EMTP modeling of IGBT dynamic performance for power dissipation estimation" INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, 8. Oktober 1995 (1995-10-08), Seiten 2656-2662, XP010193287 ISBN: 0-7803-3008-0

## Beschreibung

Die Erfindung bezieht sich auf ein Steuer- und Regelverfahren für einen selbstgeführten, von einem Gleichspannungs-Zwischenkreis gespeisten Dreipunkt-Stromrichter mit aktiven Klemmschaltem gemäß dem Oberbegriff des Anspruchs 1 sowie auf eine Vorrichtung hierzu. Derartige Stromrichter können sowohl als selbstgeführte Gleichrichter als auch als selbstgeführte Wechselrichter eingesetzt werden. Sie werden vor allem in elektrischen Antrieben mittlerer und großer Leistungen angewendet.

Aus der GB-A-2 293 503 ist ein getaktetes Netzgerät bekannt, bei welchem sichergestellt wird, dass der gesamte Ausgangsstrom so auf die Ausgangsströme der einzelnen Schalter aufgeteilt wird, dass bei keinem Schalter der maximal zulässige Strom überschritten wird, was zu einer Überlastung des Schalters führen würde. Die Beiträge der einzelnen Schalter zum Gesamtstrom werden in Abhängigkeit des Verhältnisses zwischen dem Nennstrom des einzelnen Schalters und der Summe der Nennströme aller Schalter vorgegeben.

Aus Kaku et al, Switching loss minimised space vector PWM method for IGBT threelevel inverter, IEE Proceedings: Electrical Power Applications, Vol. 144, No. 3, May 1997, Seiten 182 - 190 ist ein PWM-Verfahren für IGBT Dreipunkt-Wechselrichter bekannt, welches aufgrund besonderer Raumvektor-Vorgabe einen Betrieb mit reduzierten Schaltverlusten ermöglicht.

Aus der DE 41 27 706 A ist ein Verfahren zur Vermeidung von Kommutierungsstörungen bei im Gegentakt gesteuerten Power-MOSFET-Transistoren bekannt, insbesondere in Halbbrückenschaltungen von Pulswechselrichtem, die auf induktive Lasten speisen, bei denen pro Phase zwei MOSFET-Transistoren in Reihe in n-facher Parallelschaltung zusammen mit Freilaufdioden an einer Zwischenkreis-Gleichspannung liegen und der Phasenabgriff zwischen den MOSFET-Transistoren erfolgt. Am Ende jeder Freilaufphase in einem Zweig einer Phasenhalbbrücke wird der Anteil der Freilaufströme über die parasitären Inversdioden der MOFET-Transistoren in diesem Zweig zurückgedrängt.

In Robinson, The affect of thermal performance on device current utilisation, Power Electronics Specialists Conference, PESC '94 Record., 25^{Th} Annual IEEE Taipeh, Taiwan 20-25 June 1994, New York, IEEE, 20. Juni 1994 (1994-06-20), Seiten 427-433 wird der Einfluss der thermischen Leistungsfähigkeit auf die Geräteauslastung untersucht. Es wird vorgeschlagen, den maximalen Ausgangsstrom in Abhängigkeit thermischer Signale zu begrenzen, um derart die Sperrschichttemperatur der Schalter konstant zu hatten.

Aus Wong, EMTP Modeling of IGBT Dynamic Performance for Power Dissipation Estimation, Industry Applications Conference, 1995, Thirtieth IAS Annual Meeting, IAS '95, Conference Record of the 1995 IEEE Orlando, 8-12 Oct. 1995, New York, IEEE, 8. Oktober 1995 (1995-10-08), Seiten 2656-2662 ist ein Modell zur Beschreibung des dynamischen Verhaltens eines IGBTs bekannt, womit eine Abschätzung von Leistungsverlusten und thermische Analysen ermöglicht werden.

Die Topologie des selbstgeführten, diodengeklemmten Dreipunkt-Stromrichters am Gleichspannungszwischenkreis (Dreipunkt-NPC-Stromrichter) ist allgemein bekannt. Für Einsatzgebiete wie Industrie- oder Traktionsantriebe großer Leistungen (Mittelspannungsantriebe) wird sie auch industriell angewandt. Dabei werden als Hauptschalter zum Beispiel Insulated Gate Bipolar Transistor (IGBT-) Module mit integrierter Inversdiode eingesetzt. Aus Gründen der Modularität, der Vereinfachung des mechanischen Aufbaus oder auch zur Gewährleistung einer gleichmäßigen Sperrspannungsaufteilung bei der Reihenschaltung von Halbleiterbauelementen in derartigen Stromrichtern werden anstelle der Nullpunkt-Klemm-Dioden (NPC-Dioden) häufig auch IGBT-Module als NPC-Schalter (nachfolgend aktive NPC-Schalter oder aktive Nullpunkt-Klemm-Schalter oder aktive Klemmschalter genannt) eingebaut. Diese IGBTs werden dabei entweder durch Kurzschluss der Gate-Emitter-Strecke in den "Aus"-Zustand gesetzt oder auch zur Regelung der Sperrspannungsverteilung im aktiven Bereich betrieben, während die integrierte Inversdiode die Funktion der NPC-Diode übemimmt.

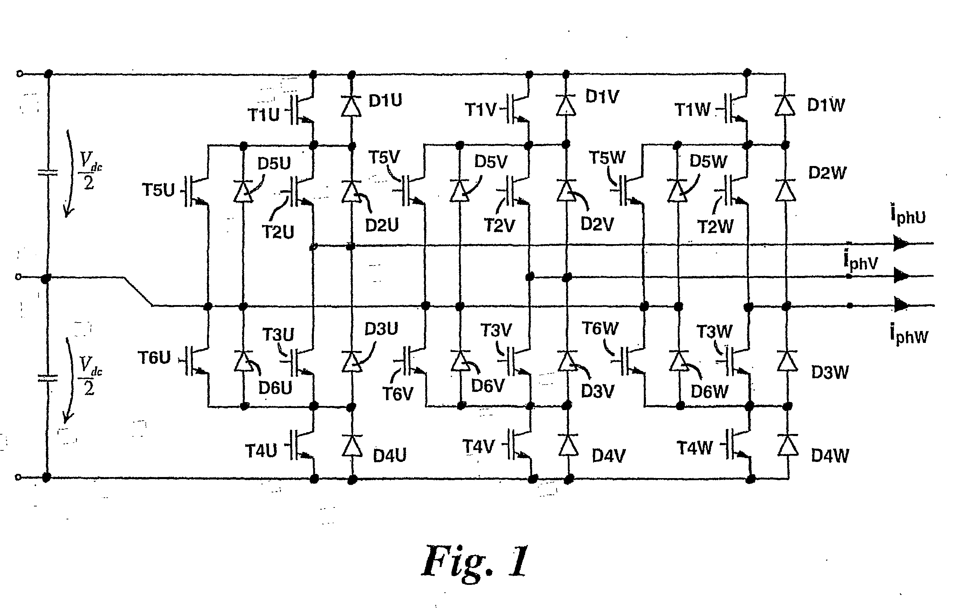

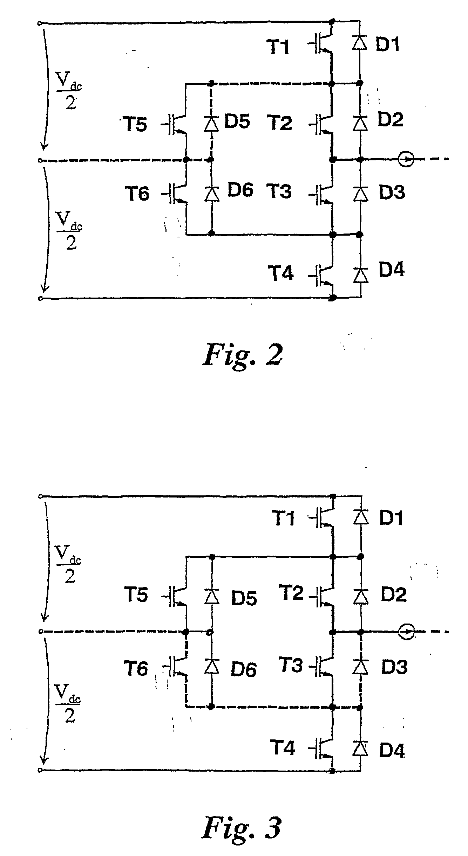

In Fig. 1 ist ein derartiger allgemein bekannter selbstgeführter, mit NPC-Schaltem bestückter Dreipunkt-Stromrichter am Gleichspannungszwischenkreis oder kurz Dreipunkt-NPC-Stromrichter gezeigt. Zwischen dem positiven Gleichspannungsanschluss und den drei Lastanschlüssen sind jeweils ein äußerer Hauptschalter T1U bzw. T1V bzw. T1 W - nachfolgend allgemein mit T1 bezeichnet - und ein innerer Hauptschalter T2U bzw. T2V bzw. T2W - nachfolgend allgemein auch mit T2 bezeichnet - in Reihe angeordnet, wobei jedem äußeren Hauptschalter T1U bzw. T1V bzw. T1W eine Inversdiode D1U bzw. D1V bzw. D1W - nachfolgend allgemein auch mit D1 bezeichnet - antiparallel liegt und jedem innerem Hauptschalter T2U bzw. T2V bzw. T2W eine Inversdiode D2U bzw. D2V bzw. D2W - nachfolgend allgemein auch mit D2 bezeichnet - antiparaflel liegt.

Zwischen dem negativen Gleichspannungsanschluß und den drei Lastanschlüssen sind jeweils ein äußerer Hauptschalter T4U bzw. T4V bzw. T4W - nachfolgend allgemein auch mit T4 bezeichnet - und ein innerer Hauptschalter T3U bzw. T3V bzw. T3W - nachfolgend allgemein auch mit T3 bezeichnet - in Reihe angeordnet, wobei jedem äußeren Hauptschalter T4U bzw. T4V bzw. T4W eine Inversdiode D4U bzw. D4V bzw. D4W - nachfolgend allgemein auch mit D4 bezeichnet - antiparallel liegt und jedem innerem Hauptschalter T3U bzw. T3V bzw. T3W eine Inversdiode D3U bzw. D3V bzw. D3W - nachfolgend allgemein auch mit D3 bezeichnet - antiparallel liegt. Die lastseitigen Phasenströme (Lastströme) sind mit i_{phU}, i_{phV}, i_{phW} bezeichnet.

Der gemeinsame Verbindungspunkt von T1 U, D1U, T2U und D2U ist über einem aktiven NPC-Schalter T5U mit antiparalleler Inversdiode D5U an die Mittelanzapfung des Gleichspannungs-Zwischenkreises angeschlossen. Desgleichen liegt der gemeinsame Verbindungspunkt von T1V, D1V, T2V und D2V über einem aktiven NPC-Schalter T5V mit antiparalleler Inversdiode D5V an der Mittelanzapfung des Gleichspannungs-Zwischenkreises. In gleicher Art und Weise ist der gemeinsame Verbindungspunkt von T1W, D1W, T2W und D2W über einem aktiven NPC-Schalter T5W mit antiparalleler Inversdiode D5W an die Mittelanzapfung des Gleichspannungs-Zwischenkreises angeschlossen. Die aktiven NPC-Schalter T5U, T5V, T5W werden nachfolgend allgemein auch mit T5 bezeichnet. Die Inversdioden D5U, D5V, D5W werden nachfolgend auch mit D5 bezeichnet.

Die Mittelanzapfung ist über zwei Kondensatoren gleicher Kapazität mit den beiden Gleichspannungsanschlüssen verbunden. Die Spannung über den Kondensatoren beträgt jeweils V_{dc}/2 (halbe Zwischenkreisspannung).

Der gemeinsame Verbindungspunkt von T3U, D3U, T4U und D4U ist über einem aktiven NPC-Schalter T6U mit antiparalleler Inversdiode D6U an die Mittelanzapfung des Gleichspannungs-Zwischenkreises angeschlossen. Desgleichen liegt der gemeinsame Verbindungspunkt von T3V, D3V, T4V und D4V über einem aktiven NPC-Schalter T6V mit antiparalleler Inversdiode D6V an der Mittelanzapfung des Gleichspannungs-Zwischenkreises. In gleicher Art und Weise ist der gemeinsame Verbindungspunkt von T3W, D3W, T4W und D4W über einem aktiven NPC-Schalter T6W mit antiparalleler Inversdiode D6W an die Mittelanzapfung des Gleichspannungs-Zwischenkreises angeschlossen. Die aktiven NPC-Schalter T6U, T6V, T6W werden nachfolgend allgemein auch mit T6 bezeichnet. Die Inversdioden D6U, D6V, D6W werden nachfolgend auch mit D6 bezeichnet.

Eine Untersuchung diodengeklemmter Dreipunkt-NPC-Stromrichter bei sinusförmiger Modulation zeigt, daß die thermische Auslegung dieser Stromrichter von vier kritischen Arbeitspunkten bestimmt wird, welche in nachstehender **Tabelle I** angegeben sind. In jedem dieser vier kritischen Arbeitspunkte ist der Phasenstrom (Laststrom) und damit die Ausgangsleistung des Stromrichters durch die maximal zulässigen Verluste der an diesem kritischen Arbeitspunkt am stärksten beanspruchten Leistungshalbleiter begrenzt. Alle anderen Halbleiter erreichen an den jeweiligen kritischen Arbeitspunkten nur eine niedrigere Sperrschichttemperatur. Da die maximalen Verluste und maximalen Sperrschichttemperaturen der einzelnen Halbleiter in den für sie kritischen Betriebspunkten vergleichbare Werte erreichen, ist ein Ersatz aller Bauelemente durch größere erforderlich, wenn die Ausgangsleistung des Stromrichters gesteigert werden soll.

Ein zusätzlicher kritischer Arbeitspunkt bei Einsatz der Stromrichter in elektrischen Antriebssystemen, besonders solchen mit Synchronmaschinen, ist der Anlauf oder Stillstand des Antriebes. Dieser Fall ist durch eine sehr niedrige Ausgangsfrequenz des Stromrichters bis zu null Hertz und einen niedrigen Modulationsgrad M gekennzeichnet. Der Phasenstrom (Laststrom) wird in diesem Fall durch die Verluste in den NPC-Dioden begrenzt, was dem Fall 2 in nachstehender **Tabelle I** entspricht. Bedingt durch die niedrige Ausgangsfrequenz kann eine Phase für eine Zeitdauer mit dem Spitzenwert des Laststromes belastet werden, welche hinreichend ist, um den thermisch stationären Zustand zu erreichen. Dadurch reduziert sich der erreichbare Laststrom gegenüber dem Betrieb bei hohen Ausgangsfrequenzen erheblich. Obwohl dieses Problem durch eine Verringerung der Schaltfrequenz bei Stillstand verkleinert werden kann, kann bei üblichen Mittelspannungsantrieben eine Reduzierung des Laststromes bei Stillstand gegenüber dem Bemessungsstrom nicht vermieden werden. Anwendungen wie zum Beispiel Warm- und Kaltwalzwerke verlangen jedoch typischerweise 200% Lastmoment und damit doppelten Laststrom bei Stillstand des Antriebes. Die Erfüllung dieser Bedingung führt folglich in nachteiliger Weise zu einer deutlichen Überdimensionierung des Dreipunkt-NPC-Stromrichters.

**Tabelle 1: Kritische Arbeitspunkte im Dreipunkt-Stromrichter**

| | **Fall 1** | **Fall 2** | **Fall 3** | **Fall 4** |
|---|---|---|---|---|
| **Leistungsfaktor** | **1** (motorisch) | 1 (motorisch) | -1 (generatorisch) | -1 (generatorisch) |
| **Modulationsgrad M** | 1.15 (maximal) | 0 (sehr klein) | 1.15 (maximal) | 0 (sehr klein) |
| **Kritische Halbleiter-BauelEmente** | Äußere Hauptschalter T1, T4, ... | NPC Dioden D5, D6, ... | Inversdioden der äußeren Hauptschalter D1, D4, ... | Innere Hauptschalter T2, T3, ... |

Bezugnehmend auf die obige Abhandlung ist die ungleichmäßige Verteilung der Verluste zwischen den einzelnen Halbleiterbauelementen ein wesentlicher Nachteil des diodengeklemmten Dreipunkt-NPC-Stromrichters sowie des wie ein diodengeklemmter Dreipunkt-NPC-Stromrichter betriebenen Dreipunkt-Stromrichters mit aktiven NPC-Schaltern. Daraus folgt auch die relativ geringe Ausnutzung der Halbleiterbauelemente, insbesondere der inneren Hauptschalter. Des weiteren muß festgestellt werden, daß die Möglichkeiten der häufig anstelle der NPC-Dioden eingebauten aktiven NPC-Schalter (mit Inversdioden) zur Beeinflussung der Verteilung der Verluste in den Halbleiterbauelementen bisher nicht aktiv genutzt worden sind.

Der Erfindung liegt die Aufgabe zugrunde, ein Steuer- und Regelverfahren für einen Dreipunkt-Stromrichter mit aktiven Klemmschaltern der eingangs genannten Art anzugeben, das die Verlustverteilung zwischen den Halbleiterbauelementen eines Phasenbausteines des Stromrichters allen Arbeitspunkten und auch bei Stillstand des Antriebes vergleichmäßigt.

Des weiteren soll eine Vorrichtung hierzu angegeben werden.

Die Aufgabe wird hinsichtlich des Steuer- und Regelverfahrens in Verbindung mit den Merkmalen des Oberbegriffes erfindungsgemäß durch die im Kennzeichen des Anspruchs 1 angegebenen Merkmale gelöst.

Die Aufgabe wird hinsichtlich der Vorrichtung in Verbindung mit den Merkmalen des Oberbegriffes erfindungsgemäß durch die im Kennzeichen des Anspruchs 11 angegebenen Merkmale gelöst.

Die mit der Erfindung erzielbaren Vorteile bestehen insbesondere darin, daß durch die Vergleichmäßigung der Verlustaufteilung zwischen den NPC-Schaltern und den inneren Schaltern in den Fällen 2 und 4 (motorischer oder generatorischer Betrieb mit sehr kleinem Modulationsgrad) nach **Tabelle I**
- unter Beibehaltung der Ausgangsleistung des Stromrichters durch Anwendung kleinerer Halbleiter als innere Hauptschalter und aktive NPC-Schalter der Aufwand an Halbleitern insgesamt wesentlich reduziert wird oder alternativ
- bei konstanter installierter Schalterleistung eine verringerte Leistungsreduktion bei Stillstand ermöglicht wird.

Weiterhin wird auch die Verringerung der Belastung der äußeren Hauptschalter bzw. Dioden in den kritischen Arbeitspunkten 1 und 3 (motorischer oder generatorischer Betrieb mit maximalem Modulationsgrad) nach vorstehender **Tabelle I** auf Kosten der inneren Hauptschalter und Dioden erreicht und damit - verbunden mit der eben genannten Vergleichmäßigung der Verlustaufteilung zwischen den NPC-Schaltern und den inneren Schaltern in den Fällen 2 und 4 - wird eine Steigerung der Ausgangsleistung des Stromrichters (Erhöhung der Leistungsausbeute) oder eine Erhöhung der Schaltfrequenz ohne erhöhten Aufwand an Halbleiterbauelementen erzielt.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:

| | |
|---|---|
| Fig.1 | einen Dreipunkt-NPC-Stromrichter mit aktiven NPC-Schaltern (Stand der Technik), |
| Fig. 2, 3 | interessierende Stromverläufe bei Kommutierungen, |
| Fig. 4 | Schaltsignale für die Kommutierungen bei Modulation einer positiven Ausgangsspannung, |
| Fig. 5 | Schaltsignale für die Kommutierungen bei Modulation einer negativen Ausgangsspannung, |
| Fig. 6 | ein Blockschaltbild einer Zusatzkomponente zur konventionellen Steuerung/Regelung eines Dreipunkt-NPC-Stromrichters. |

Zur Erläuterung der Funktionsweise des erfindungsgemäßen Steuer- und Regelverfahrens soll zunächst auf die Unterschiede zwischen den möglichen Zuständen in einem konventionellen Dreipunkt-NPC-Stromrichter ohne aktive Klemmschalter oder ohne aktive Nutzung vorhandener aktiver Klemmschalter und einem Stromrichter mit aktiver Nutzung dieser NPC-Schalter eingegangen werden.

Fig. 1 zeigt den Aufbau eines Dreipunkt-Stromrichters mit Spannungszwischenkreis mit aktiven NPC-Schaltern (Stand der Technik), wie bereits eingangs erläutert. Zur Modulation der Ausgangsspannung wird der wechselspannungsseitige Anschluß jeder Phase jeweils mit der positiven Zwischenkreisschiene (positiver Gleichspannungsanschluß), dem Nullpunkt (Mittelanzapfung) oder der negativen Zwischenkreisschiene (negativer Gleichspannungsanschluß) verbunden. Diese drei Zustände sind mit "+", "0" und "-" bezeichnet. Im konventionellen Dreipunkt-NPC-Stromrichter existiert für jeden dieser drei Zustände genau eine Kombination von Schalterstellungen, die in nachstehender **Tabelle II** zusammengefaßt sind. Im "0"-Zustand wird bei positiver Richtung des Laststromes der obere Pfad der Mittelanzapfung vom Strom durchflossen, bei negativer Richtung der untere. Es werden immer sowohl T2 als auch T3 eingeschaltet.

**Tabelle II: Schaltzustände im konventionellen Dreipunkt-NPC-Stromrichter (ohne Benutzung der aktiven Klemmschalter, Stand der Technik)**

| | **T1** | **T2** | **T3** | **T4** |
|---|---|---|---|---|
| **Zustand "+"** | 1 | 1 | 0 | 0 |
| **Zustand "0"** | 0 | 1 | 1 | 0 |
| **Zustand "-"** | 0 | 0 | 1 | 1 |

Werden die aktiven NPC-Schalter jedoch aktiv genutzt, bieten sich mehrere alternative Schalterstellungen zur Realisierung des Zustandes "0" an. Der Laststrom kann durch das Einschalten von T5 und T2 in beiden Richtungen durch den oberen Pfad der Mittelanzapfung bzw. durch das Einschalten von T6 und T3 durch den unteren Pfad der Mittelanzapfung geführt werden. Diese Zustände werden nachfolgend mit "0o2" (für den oberen Pfad) beziehungsweise "0u2" (für den unteren Pfad) bezeichnet. Mit dem Einschalten von T5 und T2 (T3 und T6 werden bzw. sind ausgeschaltet und können jeweils die halbe Zwischenkreisspannung sperren) kann T4 nach einer Kommutierung von "-" nach "0o2" auch im eingeschalteten Zustand verbleiben. Analoges gilt für den Schalter T1 nach einer Kommutierung von "+" nach "0u2". Diese Zustände werden im folgenden als "0o1" (für den oberen Pfad) und "0u1" (für den unteren Pfad) bezeichnet. Weiterhin ist natürlich auch der herkömmliche Zustand "0" wie in vorstehender **Tabelle II** schaltbar und es besteht die Möglichkeit T2, T3, T5 und T6 gleichzeitig einzuschalten. In diesem Fall ist die Aufteilung des Stromes zwischen oberen und unterem Pfad der Mittelanzapfung durch parasitäre Elemente, die Streuung der Halbleitereigenschaften sowie die Temperaturabhängigkeit der Halbleitereigenschaften (z. B. der Durchlaßspannung) bestimmt. Beide letztgenannten Schaltzustände werden nicht weiter betrachtet.

Für den "+"- und den "-"-Zustand ergeben sich durch aktive Benutzung der aktiven NPC-Schalter keine Alternativen. Die damit insgesamt sechs zur Verfügung stehenden Schaltzustände sind in nachstehender **Tabelle III** zusammengefaßt.

**Tabelle III: Schaltzustände im Dreipunkt-Stromrichter mit Benutzung der aktiven NPC-Schalter**

| | **T1** | **T2** | **T3** | **T4** | **T5** | **T6** |
|---|---|---|---|---|---|---|
| **Zustand "+"** | 1 | 1 | 0 | 0 | 0 | 1 |
| **Zustand "0o2"** | 0 | 1 | 0 | 0 | 1 | 0 |
| **Zustand "0o1"** | 0 | 1 | 0 | 1 | 1 | 0 |
| **Zustand "0u1"** | 1 | 0 | 1 | 0 | 0 | 1 |
| **Zustand "0u2"** | 0 | 0 | 1 | 0 | 0 | 1 |
| **Zustand "-"** | 0 | 0 | 1 | 1 | 1 | 0 |

Offensichtlich kann mit der gezielten Auswahl des oberen oder unteren NPC-Pfades die Verteilung der Leitverluste während des "0"-Zustandes beeinflußt werden. Die Leitverluste in den Zuständen "+" und "-" sind dagegen nicht beeinflußbar. Die Kommutierungen zu oder von den neuen Zuständen bestimmen die Verteilung der Schaltverluste aller Halbleiter.

Alle Kommutierungen finden zwischen zwei Bauelementen statt. Auch wenn mehrere Schalter umgeschaltet werden, fallen maßgebliche Verluste immer nur in einem aktiven Schalter und einer Inversdiode an. Die anderen Schalter schalten im Prinzip ohne Verluste, da sie vor bzw. nach der Kommutierung entweder keinen Strom führen oder keine Sperrspannung übernehmen.

Im folgenden werden die vier Typen von Kommutierungen des vorgeschlagenen Steuerverfahrens der herkömmlichen Kommutierung im Dreipunkt-NPC-Stromrichter gegenübergestellt und ihr Einfluß auf die Verteilung der Verluste erläutert. Exemplarisch wird dabei ein positiver Laststrom und die Modulation einer positiven Ausgangsspannung betrachtet. Der Brückenzweig wird zwischen der positiven Gleichspannungsschiene (Zustand "+") und der Mittelanzapfung (Nullzustand bzw. "0") hin- und zurückgeschaltet.

Nachfolgend wird zunächst die herkömmliche Kommutierung "+" ↔ "0" betrachtet. Ohne aktive Einbeziehung der aktiven NPC-Schalter kommutiert der Laststrom zwischen T1 und D5. Äußerer Hauptschalter T1 und innerer Hauptschalter T3 werden alternierend ein- und ausgeschaltet, während T2 und T4 im Ein- bzw. Auszustand verbleiben. Schaltverluste treten in T1 und D5 auf (siehe hierzu auch Fig. 2).

Nachfolgend wird die erfindungsgemäß vorgeschlagene Kommutierung "+" ↔ "0o2" betrachtet, bei welcher die NPC-Schalter aktiv einbezogen werden. Der Laststrom wird gezielt auf den oberen Pfad der Mittelanzapfung kommutiert, und zwar unabhängig von der Stromrichtung. Dazu wird zuerst T6 geöffnet (ausgeschaltet), der im "+"-Zustand vorzugsweise eingeschaltet ist. Anschließend wird T1 aus- und unter Beachtung der erforderlichen Totzeit der Klemmschalter T5 , d. h. nach erfolgter Kommutierung des Stromes eingeschaltet. Bei der Kommutierung zurück auf "+" erfolgen die inversen Schaltvorgänge in umgekehrter Reihenfolge. Schaltverluste treten wie bei der herkömmlichen Kommutierung jeweils in T1 und D5 auf (siehe Fig. 2).

Nachfolgend wird die Kommutierung "+" ↔ "0u2" betrachtet. Der Laststrom wird unabhängig von der Stromrichtung gezielt auf den unteren Pfad der Mittelanzapfung kommutiert, indem zuerst T1 aus- und unter Beachtung der Totzeit der innere Hauptschalter T3 eingeschaltet und danach auch T2 geöffnet wird. Zunächst wird sich der Laststrom auf den oberen und den unteren Pfad der Mittelanzapfung verteilen. Der Strom im oberen Pfad kommutiert mit dem Öffnen von T2 ebenfalls auf den bereits leitenden unteren Pfad. Bei der rückwärtigen Kommutierung wird zuerst T2 geschlossen und anschlie-ßend T3 geöffnet. Mit dem Einschalten von T1 kommutiert der gesamte Laststrom vom unteren Pfad der Mittelanzapfung zurück auf den "+"-Pfad. Maßgebliche Schaltverluste treten in T1 und D3 auf (siehe Fig. 3).

Nachfolgend wird die Kommutierung "+" ↔ "Ou1" betrachtet. Wie bei der vorstehend beschriebenen Kommutierung "+" ↔ "Ou2" wird der Laststrom unabhängig von der Stromrichtung gezielt auf den unteren Pfad der Mittelanzapfung kommutiert. Die Kommutierung wird aber durch das Ausschalten von T2 erreicht. T3 wird nach der Totzeit eingeschaltet, T1 bleibt eingeschaltet. Bei der Kommutierung zurück auf "+" erfolgen die inversen Schaltvorgänge in umgekehrter Reihenfolge. Schaltverluste entstehen jeweils in T2 und D3 (siehe Fig. 3).

Mit dem Einsatz der Kommutierung "+" ↔ "0u2" lassen sich gegenüber der Kommutierung "+" ↔ "0o2" und der konventionellen Kommutierung die Schaltverluste von der NPC-Diode D5 auf die innere Inversdiode D3 verlagern. Mit dem Einsatz der Kommutierung "+" ↔ "0u1" lassen sich zusätzlich die Schaltverluste vom äußeren Schalter T1 auf den inneren Schalter T2 verlagern.

Nachfolgend wird die Kommutierung "+" ↔ "0o1" betrachtet. Diese Kommutierung ist gleichwertig mit der Kommutierung "+" ↔ "0o2" und wird nur in Richtung "0o1" → "+" eingesetzt, falls sich der Brückenzweig nach vorheriger Modulation einer negativen Ausgangsspannung im Zustand "0o1" befindet und nachfolgend der Zustand "+" angeordnet wird. Dazu wird zunächst T4 geöffnet und danach weiter wie bei der Kommutierung "0o2" → "+" verfahren. Schaltverluste entstehen in T1 und D5.

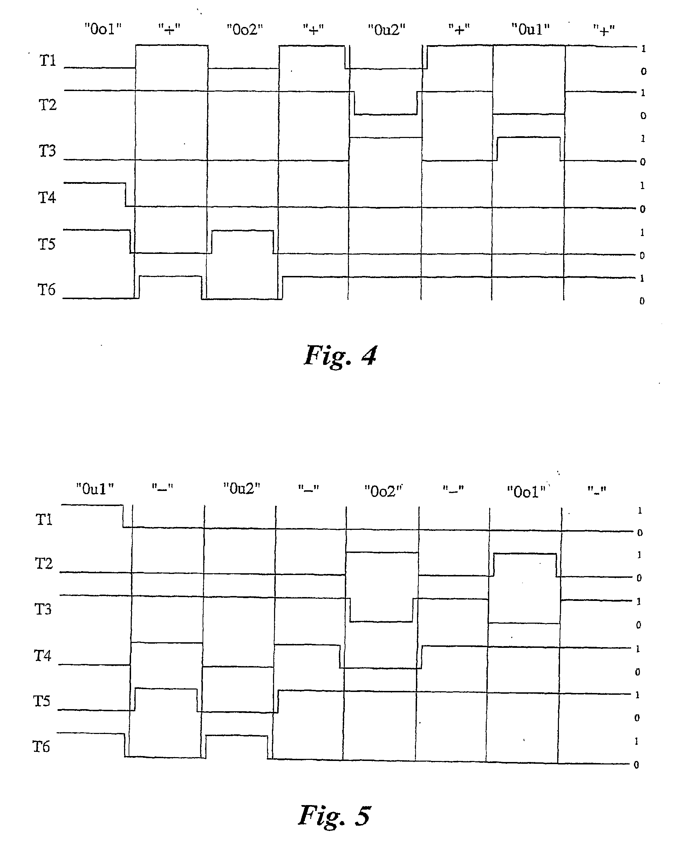

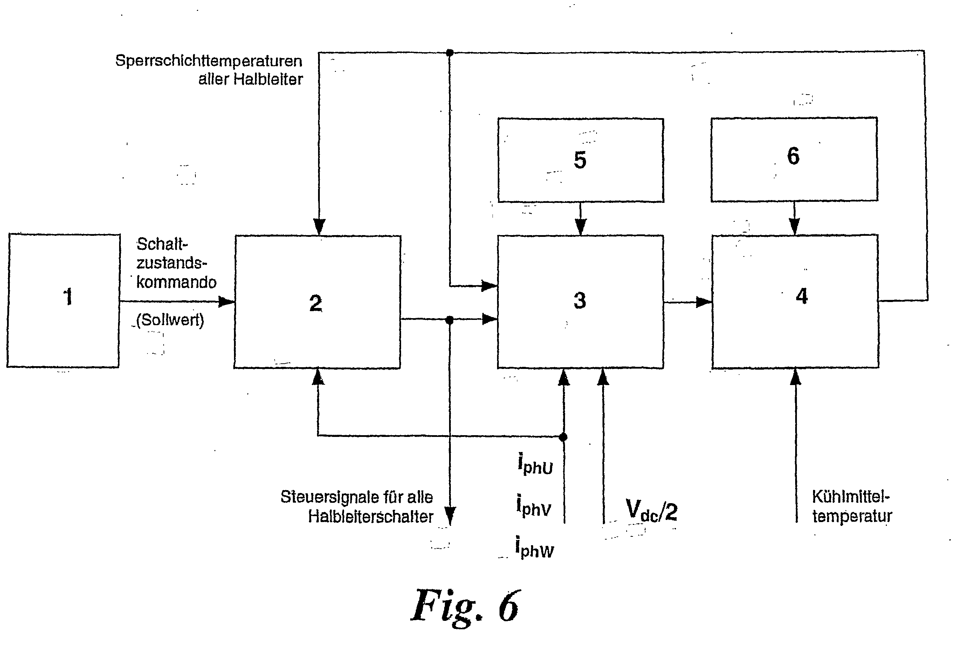

Die Kommutierungen zwischen dem Zustand "-" und den verschiedenen Nullzuständen sind den vorstehend beschriebenen Kommutierungen äquivalent. Bei negativem Laststrom treten die Verluste gegenüber dem Fall des positiven Laststromes jeweils im antiparallelen Halbleiter auf. In nachstehender **Tabelle IV** sind die verlustbehafteten Halbleiter für sämtliche Kommutierungen angegeben. Die den Halbleiterschaltern zuzuführenden Schaltsignale für die Kommutierungen bei Modulation einer positiven Ausgangsspannung zeigt Fig. 4, während Fig. 5 die bei Modulation einer negativen Ausgangsspannung den Halbleiterschaltern zuzuführenden Schaltsignale zeigt.

**Tabelle IV: Schaltverluste bei Kommutierungen im Dreipunkt-Stromrichter mit aktiver Benutzung der aktiven NPC-Schalter**

| | **T1** | **D1** | **T2** | **D2** | **T3** | **D3** | **T4** | **D4** | **T5** | **D5** | **T6** | **D6** |
|---|---|---|---|---|---|---|---|---|---|---|---|---|
| **Positiver Laststrom** | | | | | | | | | | | | |
| "+" ↔ "0o2" | x | | | | | | | | | x | | |
| "+" ↔ "0o1" | x | | | | | | | | | x | | |
| "+" ↔ "0u1" | | | x | | | x | | | | | | |
| "+" ↔ "0u2" | x | | | | | x | | | | | | |
| "0o2" ↔ "-" | | | x | | | | | x | | | | |
| "0o1" ↔ "-" | | | x | | | x | | | | | | |
| "0u1" ↔ "-" | | | | | | | | x | | | x | |
| "0u2" ↔ "-" | | | | | | | | x | | | x | |

| **Negativer Laststrom** | | | | | | | | | | | | |
|---|---|---|---|---|---|---|---|---|---|---|---|---|
| "+" ↔ "0o2" | | x | | | | | | | x | | | |
| "+" ↔ "0o1" | | x | | | | | | | x | | | |
| "+" ↔ "0u1" | | | | x | x | | | | | | | |
| "+" ↔ "0u2" | | x | | | x | | | | | | | |
| "0o2" ↔ "-" | | | | x | | | x | | | | | |
| "0o1" ↔ "-" | | | | x | x | | | | | | | |
| "0u1" ↔ "-" | | | | | | | x | | | | | x |
| "0u2" ↔ "-" | | | | | | | x | | | | | x |

Durch den gezielten Einsatz aller oben beschriebenen Kommutierungen, ist es möglich, die Verluste (und damit die Sperrschichttemperaturen) von je zwei Schaltergruppen einander anzunähern. Bei maximaler Belastung äußerer Halbleiterbauelemente bei großem Modulationsgrad (Fälle 1 und 3 nach vorstehender **Tabelle I**) werden durch geeignete Auswahl der Nullzustände die Sperrschichttemperaturen der äußeren und der inneren Halbleiter bzw. Hauptschalter einander angenähert. Die Sperrschichttemperatur der NPC-Schalter liegt dabei auf einem niedrigeren Niveau. Bei maximaler Belastung der NPC-Dioden oder der inneren Halbleiterschalter bei kleinem Modulationsgrad (Fälle 2 und 4 nach vorstehender **Tabelle I**) werden durch geeignete Auswahl der Nullzustände die Sperrschichttemperaturen der NPC- und der inneren Halbleiter einander angenähert. Dabei liegt die Sperrschichttemperatur der äußeren Halbleiter bzw. Hauptschalter auf einem niedrigeren Niveau.

Die vorstehend erläuterte Funktion wird durch eine Regelung der Sperrschichttemperatur der Halbleiterbauelemente bzw. ein Steuerungs- und Regelungssystem erfüllt, welches die Verluste und daraus die Sperrschichttemperaturen aller Halbleiterbauelemente kontinuierlich ermittelt, aus den Schaltkommandos der überlagerten Stromrichterregelung (PWM, DTC) und der Information über die Sperrschichttemperaturen geeignete Schaltzustände ("0o2", "0o1", "0u1" oder "0u2") auswählt und daraus die erforderlichen Ansteuersignale für die Halbleiterschalter generiert. Das Steuerungssystem unter aktiver Einbeziehung der aktiven Klemmschalter ist lediglich eine Zusatzkomponente zur konventionellen Steuerung des Dreipunkt-Stromrichters und ersetzt selbstverständlich nicht den Modulator einer Pulsbreitenmodulation (PWM) oder die Regler einer direkten Regelung.

Ein Blockschaltbild des vorgeschlagenen Systems ist in Fig. 6 dargestellt. Ein Modulator 1 (PWM bzw. Pulse-Width-Modulation oder DTC bzw. Direct-Torque-Control) führt einem Temperaturregler + Ansteuerautomat 2 Schaltzustandskommandos (Sollwerte) zu. Diesem Temperaturregler + Ansteuerautomat 2 liegen die Sperrschichttemperaturen aller Halbleiter und die Lastströme i_{phU}, i_{phV}, i_{phW} vor. Im Temperaturregler erfolgt dabei die Auswahl der Kommutierungsvorgänge und Nullzustände entsprechend einer optimalen Sperrschichttemperaturverteilung der Halbleiter. Der Ansteuerautomat realisiert dabei die Ausgabe der erforderlichen Ansteuersignale für alle Halbleiterschalter unter Beachtung der Schaltreihenfolge während der Kommutierungen.

Der Temperaturregler + Ansteuerautomat 2 gibt ausgangsseitig Steuersignale für alle Halbleiterschalter (äußere Hautschalter, innere Hauptschalter, NPC-Schalter) ab. Diese Steuersignale werden des weiteren einem Eingang einer On-line-Berechnung 3 der Schalt- und Leitverluste zugeleitet. Eingangsseitig werden der On-line-Berechnung 3 ferner die Sperrschichttemperaturen aller Halbleiter, die Zwischenkreisspannung V_{dc}/2, die Lastströme i_{phU}, i_{phV}, i_{phW} sowie die Signale eines Bauglieds 5 zugeleitet, in welchem Halbleiter-Verlustapproximationen gespeichert sind.

Das Ausgangssignal der On-line-Berechnung 3 gelangt zu einer On-line-Berechnung 4 der Sperrschichttemperaturen aller Halbleiter, welche eingangsseitig die aktuelle Kühlmitteltemperatur der Halbleiter und Signale eines thermischen Stromrichtermodells 6 empfängt. Die On-line-Berechnung 4 gibt ausgangsseitig die Sperrschichttemperaturen aller Halbleiter ab.

In nachstehender **Tabelle V** ist exemplarisch ein Verfahren angegeben, welches sich für die Auswahl der Kommutierungsvorgänge eignet. Es ist sowohl für den Einsatz mit einer PWM als auch mit direkten Regelverfahren wie Direct-Torque-Control (DTC) oder Direkter Selbstregelung (DSR) geeignet. Es stellt sicher, das immer jener Halbleiter mit der momentan höchsten Sperrschichttemperatur bei der folgenden Kommutierung nicht mit Schaltverlusten belastet wird. Die Leitverluste der Halbleiter sind in diesem Auswahlverfahren nicht berücksichtigt. Für den üblichen Fall, daß die Leitverluste allein nicht zur Erwärmung eines Halbleiters auf die maximale Sperrschichttemperatur führen, gewährleistet dieses Verfahren eine möglichst gleichmäßige Sperrschichttemperaturverteilung.

**Tabelle V: Entscheidungstafel für Kommutierungen in den Nullzustand**

| **Modulation** | **Laststrom** | **Sperrschichttemperaturen ϑj** | | | **Nullzustand** |
|---|---|---|---|---|---|
| Positive Spannung (+ → 0) | Laststrom > 0 | T1 > T2 | D5 > D3 | | "0u1" |
| | | | D5 < D3 | T1 > D3 | "0u1" |
| | | | | T1 < D3 | "0o2" |
| | | T1 < T2 | D5 > D3 | | "0u2" |
| | | | D5 < D3 | | "0o2" |
| | Laststrom < 0 | D1 > D2 | T5 > T3 | | "0u1" |
| | | | T5 < T3 | D1 > T3 | "0u1" |
| | | | | D1 < T3 | "0o2" |
| | | D1 < D2 | T5 > T3 | | "0u2" |
| | | | T5 < T3 | | "0o2" |
| Negative Spannung (- → 0) | Laststrom > 0 | T2 > T6 | D4 > D3 | T2 > D4 | "0u2" |
| | | | | T2 < D4 | "0o1" |
| | | | D4 < D3 | | "0u2" |
| | | T2 < T6 | D4 > D3 | | "0o1" |
| | | | D4<D3 | | "0o2" |
| | Laststrom < 0 | D2 > D6 | T4 > T3 | D2 > T4 | "0u2" |
| | | | | D2 < T4 | "0o1" |
| | | | T4 < T3 | | "0u2" |
| | | D2 < D6 | T4 > T3 | | "0o1" |
| | | | T4 < T3 | | "0o2" |

Eine Verbesserung des oben genannten Verfahrens wird durch eine Einbeziehung der im kommenden Nullzustand zu erwartenden Leitverluste der Halbleiter im stationären Betrieb in die Berechnung erreicht. Bei Anwendung in einer PMW ist die Dauer des folgenden Nullzustandes bekannt, bei Anwendung eines direkten Regelverfahrens, wie beispielsweise DTC, kann deren Dauer aus dem Maschinenmodell vorausberechnet werden. Damit kann die Kommutierungsart in den Nullzustand so gewählt werden, daß nach der Kommutierung und dem anschließenden Nullzustand die höchste auftretende Sperrschichttemperatur eines Halbleiters minimal ist.

Das vorgeschlagene Steuerverfahren schafft größte Vorteile in Schaltungen, bei denen die Halbleiter an der Grenze ihrer thermischen Leistungsfähigkeit arbeiten, aber in der Lage sind, höhere Ströme ein- und auszuschalten, wie dies zum Beispiel bei IGBTs im allgemeinen der Fall ist. Dann wird mittels des Verfahrens eine Steigerung der Ausgangsleistung des Stromrichters ohne erhöhten Aufwand an Halbleiterbauelementen erzielt. Sind die aktiven NPC-Schalter bereits eingebaut, etwa als IGBT-Module, werden aber nicht aktiv genutzt, bietet sich das Verfahren besonders an. Das Verfahren ist aber auch für Stromrichter sinnvoll, bei denen die aktiven NPC-Schalter zusätzlich eingebaut werden müssen, da dieser Mehraufwand gegenüber der erreichbaren Steigerung der Ausgangsleistung des Stromrichters klein ist. Arbeiten die eingesetzten Halbleiter bereits an der Grenze ihres maximal zulässigen abschaltbaren Stromes, so daß eine Steigerung der Ausgangsleistung nicht in Frage kommt, ist bei Einsatz des vorgeschlagenen Steuerverfahrens eine Erhöhung der Schaltfrequenz des Stromrichters ohne erhöhten Aufwand an Halbleiterelementen möglich. Das zweite Ziel, die Verringerung der erforderlichen Leistungsreduzierung bei geringen Grundfrequenzen, wird ebenfalls erreicht.

Aus der vorstehend behandelten **Tabelle III** ist ersichtlich, daß die NPC-Schalter immer dann eingeschaltet sind, wenn im konventionellen Dreipunkt-NPC-Stromrichter ohne aktive NPC-Schalter die entsprechenden NPC-Dioden die Spannung über den äußeren Schaltern auf V_{dc}/2 klemmen, d. h. im Zustand "+" ist T6 eingeschaltet und im Zustand "-" ist T5 eingeschaltet. Im Unterschied zum konventionellen Dreipunkt-NPC-Stromrichter ohne aktiv genutzte NPC-Schalter ist damit die gleichmäßige Spannungsverteilung zwischen T3 und T4 im Zustand "+" und zwischen T1 und T2 im Zustand "-" unabhängig von der Verteilung der Leckströme der Halbleiter und ohne zusätzliche passive Symmetrierwiderstände gewährleistet. Ein weiterer Vorteil des Verfahrens ist somit die Einsparung passiver Komponenten und der Symmetrierverluste.

Das vorgeschlagene Verfahren und die Steuervorrichtung kann in allen gängigen Dreipunkt-NPC-Stromrichtern mit aktiven NPC-Schaltern realisiert werden, bei welchen alle aktiven Schalter durch abschaltbare Halbleiterbauelemente realisiert sind, z. B. durch IGBTs, IGCTs, MCTs, MTOs, MOSFETs oder Siliziumkarbid- (SiC-) Bauelementeimplementiert, wie Mittelspannungsstromrichter für Industrieanwendungen, Traktion oder HVDC-Light.

## Patentansprüche

1. Steuer- und Regelverfahren für einen an einem Gleichspannungs-Zwischenkreis angeschlossenen ein- oder mehrphasigen Dreipunkt-Stromrichter, mit zwei in Serie liegenden ersten und zweiten Schaltern (T1, T2, T3, T4) mit jeweils zugehörigen antiparallelen ersten und zweiten Dioden (D1, D2, D3, D4) zwischen jedem Gleichspannungsanschluss und jedem Lastanschluss, wobei der gemeinsame Verbindungspunkt der beiden zweiten Schalter (T2, T3) den Lastanschluss bildet und wobei zwischen jedem gemeinsamen Verbindungspunkt eines zweiten Schalters (T2, T3) mit einem ersten Schalter (T1, T4) und der Mittelanzapfung des Gleichspannungs-Zwischenkreises jeweils ein dritter Schalter (T5, T6) mit jeweils zugehöriger antiparalleler dritter Diode (D5, D6) liegt, wodurch ein erster und ein zweiter Pfad zur Verbindung eines Lastanschlusses mit der Mittelanzapfung gebildet werden, **dadurch gekennzeichnet,**
- **dass** unabhängig von der Richtung des Laststromes mindestens einer der dritten Schalter (T5, T6) zusammen mit mindestens einem zweiten Schalter (T2, T3) zur Verbindung eines Lastanschlusses mit der Mittelanzapfung eingeschaltet wird, um derart den Strom während eines Nullzustandes gezielt durch den ersten, den zweiten oder durch beide Pfade der Mittelanzapfung zu führen,
- **dass** die Einschaltung der dritten Schalter (T5, T6) in Abhängigkeit der momentanen thermischen Belastung der Schalter und Dioden (T1 bis T6, D1 bis D6) erfolgt und
- **dass** die Einschaltung der dritten Schalter (T5, T6) derart erfolgt, dass immer jener Schalter mit zugehöriger Diode (T1 bis T6, D1 bis D6) mit der momentan höchsten Sperrschichttemperatur bei der folgenden Kommutierung nicht mit Schaltverlusten belastet wird.

2. Steuer- und Regelverfahren nach Anspruch 1, **dadurch gekennzeichnet, dass** eine Kommutierung von einem der äußeren - positiven oder negativen - Gleichspannungsanschlüsse auf den mittleren Gleichspannungsanschluss bzw. die Mittelanzapfung derart erfolgt, dass zunächst derjenige erste Schalter (T1, T4), der mit dem betreffenden äußeren Gleichspannungsanschluss direkt verbunden ist, ausgeschaltet wird und dass anschließend nach einer Totzeit der dritte Schalter (T5, T6) in derselben Brückenhälfte eingeschaltet wird.

3. Steuer- und Regelverfahren nach Anspruch 1, **dadurch gekennzeichnet, dass** eine Kommutierung von einem der äußeren - positiven oder negativen - Gleichspannungsanschlüsse auf den mittleren Gleichspannungsanschluss bzw. die Mittelanzapfung derart erfolgt, dass zunächst derjenige zweite Schalter (T1, T4), der mit dem betreffenden äußeren Gleichspannungsanschluss direkt verbunden ist, ausgeschaltet wird, dass anschließend nach einer Totzeit der zweite Schalter (T2, T3) in der anderen Brückenhälfte eingeschaltet wird und das nach einer weiteren Totzeit derjenige zweite Schalter (T2, T3), welcher sich in derselben Brückenhälfte wie der ausgeschaltete erste Schalter (T1, T4) befindet, ausgeschaltet wird.

4. Steuer- und Regelverfahren nach Anspruch 1, **dadurch gekennzeichnet, dass** eine Kommutierung von einem der äußeren - positiven oder negativen - Gleichspannungsanschlüsse auf den mittleren Gleichspannungsanschluss bzw. die Mittelanzapfung derart erfolgt, dass zunächst derjenige zweite Schalter (T2, T3), der mit dem betreffenden äußeren Gleichspannungsanschluss über einen ersten Schalter (T1, T4) verbunden ist, ausgeschaltet wird und dass anschließend nach einer Totzeit der zweite Schalter (T2, T3) in der anderen Brückenhälfte eingeschaltet wird.

5. Steuer- und Regelverfahren nach einem der vorstehenden Ansprüche, **dadurch gekennzeichnet, dass** aus den Schaltzustandskommandos einer überlagerten Stromrichterregelung, den Phasenströmen und den Sperrschichttemperaturen der Schalter und Dioden (T1 bis T6, D1 bis D6) die Steuersignale für die Schalter (T1 bis T6) gebildet werden, welche die momentane thermische Belastung der Schalter und Dioden berücksichtigen.

6. Steuer- und Regelverfahren nach Anspruch 5, **dadurch gekennzeichnet, dass** die Sperrschichttemperaturen derjenigen Schalter und Dioden (T1 bis T6, D1 bis D6) miteinander verglichen werden, welche in Abhängigkeit von der zu modulierenden Spannung und der Richtung des Laststromes bei der nächsten Kommutierung in einen Nullzustand potentiell mit Schaltverlusten belastet werden könnten und dass der nächste Nullzustand so ausgewählt wird, dass derjenige der verglichenen Schalter und Dioden (T1 bis T6, D1 bis D6) mit der höchsten Sperrschichttemperatur bei der folgenden Kommutierung nicht mit Schaltverlusten belastet wird.

7. Steuer- und Regelverfahren nach Anspruch 5 oder 6, **dadurch gekennzeichnet, dass** eine On-Line-Berechnung der Schalt- und Leitverluste in Abhängigkeit der Steuersignale, der Zwischenkreisspannung, der Phasenströme, der Sperrschichttemperaturen und von Verlustapproximationen der Schalter und Dioden (T1 bis T6, D1 bis D6) erfolgt.

8. Steuer- und Regelverfahren nach Anspruch 7, **dadurch gekennzeichnet, dass** eine On-Line-Berechnung der Sperrschichttemperaturen in Abhängigkeit der Schalt- und Leitverluste, der Kühlmitteltemperatur und eines thermischen Stromrichtermodells erfolgt.

9. Steuer- und Regelvorrichtung für einen an einem Gleichspannungs-Zwischenkreis angeschlossenen ein- oder mehrphasigen Dreipunkt-Stromrichter, mit zwei in Serie liegenden ersten und zweiten Schaltern (T1, T2, T3, T4) mit jeweils zugehöriger antiparallelen ersten und zweiten Dioden (D1, D2, D3, D4) zwischen jedem Gleichspannungsanschluss und jedem Lastanschluss, wobei der gemeinsame Verbindungspunkt der beiden zweiten Schalter (T2, T3) den Lastanschluss bildet und wobei zwischen jedem gemeinsamen Verbindungspunkt eines zweiten Schalters (T2, T3) mit einem ersten Schalter (T1, T4) und der Mittelanzapfung des Gleichspannungs-Zwischenkreises jeweils ein dritter Schalter (T5, T6) mit jeweils zugehöriger antiparalleler dritter Diode (D5, D6) liegt, wodurch sich ein erster und ein zweiter Pfad zur Verbindung eines Lastanschlusses mit der Mittelanzapfung bilden, **dadurch gekennzeichnet,**
- **dass** ein Regler (2) vorgesehen ist, welcher aus den Schaltzustandskommandos eines Modulators (1), den Phasenströmen und den Sperrschichttemperaturen der Schalter und Dioden (T1 bis T6, D1 bis D6) Steuersignale für die Schalter (T1 bis T6) bildet, wobei die Bildung der Steuersignale derart erfolgt,
- **dass** die Einschaltung der dritten Schalter (T5, T6) in Abhängigkeit der momentanen thermischen Belastung der Schalter und Dioden (T1 bis T6, D1 bis D6) erfolgt und
- **dass** die Einschaltung der dritten Schalter (T5, T6) derart erfolgt, dass immer jener Schalter mit zugehöriger Diode (T1 bis T6, D1 bis D6) mit der momentan höchsten Sperrschichttemperatur bei der folgenden Kommutierung nicht mit Schaltverlusten belastet wird.

10. Steuer- und Regelvorrichtung nach Anspruch 9, **dadurch gekennzeichnet, dass** eine erste On-line-Berechnung (3) eingangsseitig die Steuersignale für die Schalter (T1 bis T6), die Sperrschichttemperaturen der Schalter und Dioden (T1 bis T6, D1 bis D6), die Phasenströme, die Zwischenkreisspannung und die Signale eines Bauglieds (5), in welchem Halbleiter-Verlustapproximationen gespeichert sind, empfängt und ausgangsseitig berechnete Schalt- und Leitverluste abgibt.

11. Steuer- und Regelvorrichtung nach Anspruch 10, **dadurch gekennzeichnet, dass** eine zweite On-line-Berechnung (4) eingangsseitig die Signale der ersten On-line-Berechnung (4), die Kühlmitteltemperatur und Signale eines thermischen Stromrichtermodells (6) empfängt und ausgangsseitig die Sperrschichttemperaturen der Schalter und Dioden (T1 bis T6, D1 bis D6), abgibt.

## Claims

1. Open-loop and closed-loop control method for a single-phase or polyphase three-point converter which is connected to a DC voltage intermediate circuit, having two series-connected first and second switches (T1, T2, T3, T4) with respectively associated back-to-back parallel-connected first and second diodes (D1, D2, D3, D4) between each DC voltage connection and each load connection, with the common junction point of the two second switches (T2, T3) forming the load connection, and with in each case a third switch (T5, T6) with a respectively associated back-to-back parallel-connected third diode (D5, D6) being connected between each common junction point of a second switch (T2, T3) and a first switch (T1, T4) and the centre tap of the DC voltage intermediate circuit, as a result of which a first and a second path are formed for connecting a load connection to the centre tap, **characterized**
- **in that**, irrespective of the direction of the load current, at least one of the third switches (T5, T6) is connected to the centre tap together with at least one second switch (T2, T3) for connection of a load connection, in order in this way to carry the current deliberately through the first path, the second path, or through both paths, to the centre tap during a null state,
- **in that** the third switches (T5, T6) are switched on as a function of the instantaneous thermal load on the switches and diodes (T1 to T6, D1 to D6) and
- **in that** the third switches (T5, T6) are switched on such that that switch (T1 to T6, D1 to D6) with the instantaneously highest boundary layer temperature is never loaded with switching losses during the subsequent commutation.

2. Open-loop and closed-loop control method according to Claim 1, **characterized in that** commutation takes place from one of the outer - positive or negative - DC voltage connections to the centre DC voltage connection or to the centre tap such that that first switch (T1, T4) which is connected directly to the relevant outer DC voltage connection is initially switched off, and such that, after a dead time, the third switch (T5, T6) is then connected in the same bridge half.

3. Open-loop and closed-loop control method according to Claim 1, **characterized in that** commutation takes place from one of the outer - positive or negative - DC voltage connections to the centre DC voltage connection or to the centre tap such that that second switch (T1, T4) which is connected directly to the relevant outer DC voltage connection is initially switched off, and such that, after a dead time, the second switch (T2, T3) in the other bridge half is switched on, and **in that**, after a further dead time, that second switch (T2, T3) which is located in the same bridge half as the switched-off first switch (T1, T4) is switched off.

4. Open-loop and closed-loop control method according to Claim 1, **characterized in that** commutation takes place from one of the outer - positive or negative - DC voltage connections to the centre DC voltage connection or to the centre tap such that that second switch (T2, T3) which is connected to the relevant outer DC voltage connection via a first switch (T1, T4) is initially switched off, and such that, after a dead time, the second switch (T2, T3) in the other bridge half is then switched on.

5. Open-loop and closed-loop control method according to one of the preceding claims, **characterized in that** the control signals for the switches (T1 to T6); which take account of the instantaneous thermal load on the switches and diodes, are formed from the switching state commands from a higher-level converter closed-loop control system, the phase currents and the boundary layer temperatures of the switches and diodes (T1 to T6, D1 to D6).

6. Open-loop and closed-loop control method according to Claim 5, **characterized in that** the boundary layer temperatures of those switches and diodes (T1 to T6, D1 to D6) which could potentially be loaded with switching losses as a function of the voltage to be modulated and the direction of the load current during the next commutation to a null state are compared with one another, and **in that** the next null state is selected such that that one of the compared switches and diodes (T1 to T6, D1 to D6) which has the highest boundary layer temperature is not loaded with switching losses during the subsequent commutation.

7. Open-loop and closed-loop control method according to Claim 5 or 6, **characterized in that** an on-line calculation is carried out of the switching and conduction losses as a function of the control signals, of the intermediate-circuit voltage, of the phase currents, of the boundary layer temperatures, and of loss approximations of the switches and diodes (T1 to T6, D1 to D6).

8. Open-loop and closed-loop control method according to Claim 7, **characterized in that** an on-line calculation of the boundary layer temperatures is carried out as a function of the switching and conduction losses, of the coolant temperature and of a thermal converter model.

9. Open-loop and closed-loop control apparatus for a single-phase or polyphase three-point converter which is connected to a DC voltage intermediate circuit, having two series-connected first and second switches (T1, T2, T3, T4) with respectively associated back-to-back parallel-connected first and second diodes (D1, D2, D3, D4) between each DC voltage connection and each load connection, with the common junction point of the two second switches (T2, T3) forming the load connection, and with in each case a third switch (T5, T6) with a respectively associated back-to-back parallel-connected third diode (D5, D6) being connected between each common junction point of a second switch (T2, T3) and a first switch (T1, T4) and the centre tap of the DC voltage intermediate circuit, as a result of which a first and a second path are formed for connecting a load connection to the centre tap, **characterized**
- **in that** a regulator (2) is provided, which forms control signals for the switches (T1 to T6) from the switching state commands of a modulator (1), the phase currents and the boundary layer temperatures of the switches and diodes (T1 to T6, D1 to D6), with the control signals being designed in such a way
- that the third switches (T5, T6) are switched on as a function of the instantaneous thermal load on the switches and diodes (T1 to T6, D1 to D6) and
- that the third switches (T5, T6) are.switched on such that that switch (T1 to T6, D1 to D6) with the instantaneously highest boundary layer temperature is never loaded with switching losses during the subsequent commutation.

10. Open-loop and closed-loop control apparatus according to Claim 9, **characterized in that** a first on-line calculation (3) receives, on the input side, the control signals for the switches (T1 to T6), the boundary layer temperatures of the switches and diodes (T1 to T6, D1 to D6), the phase currents, the intermediate-circuit voltage and the signals from a component (5) in which semiconductor loss approximations are stored, and emits calculated switching and conduction losses on the output side.

11. Open-loop and closed-loop control apparatus according to Claim 10, **characterized in that** a second on-line calculation (4) receives, on the input side, the signals from the first on-line calculation (4), the coolant temperature and signals from a thermal converter model (6), and emits the boundary layer temperatures of the switches and diodes (T1 to T6, D1 to D6) on the output side.

## Revendications

1. Procédé de commande et de régulation pour un ou plusieurs convertisseurs de courant polyphasé à montage Hartley raccordés à un circuit intermédiaire à tension continue et dans lequel
- entre chaque raccord de tension continue et chaque raccord de charge, deux contacteurs, premiers et seconds (T1, T2, T3, T4) sont montés en série, et antiparallèlement à ceux-ci, sont montées des premières et secondes diodes (D1, D2, D3, D4),
- le point commun de liaison des deux seconds contacteurs (T2, T3) forme le raccord de charge,
- entre chaque point de liaison commun d'un second contacteur (T2, T3) à un premier contacteur (T1, T4) et le branchement médian du circuit intermédiaire à circuit continu, est monté un troisième contacteur (T5, T6) avec antiparallèlement à celui-ci une troisième diode (D5, D6), de sorte que sont formées une première et deuxième lignes de liaison d'un raccord de charge au branchement médian,
**caractérisé en ce que**
- indépendamment du sens du courant de charge, au moins un des troisièmes contacteurs (T5, T6) est connecté en même temps qu'au moins un second contacteur (T2, T3) pour relier un raccord de charge au branchement médian, de manière à, pendant un état zéro, faire ainsi passer le courant à travers la première, la deuxième ou les deux lignes du branchement médian,
- l'enclenchement du troisième contacteur (T5, T6) s'effectue en fonction de la charge thermique instantanée des contacteurs et diodes (T1 à T6, D1 à D6),
- l'enclenchement d'un troisième contacteur (T5, T6) a lieu de manière que toujours chaque contacteur, avec la diode correspondante (T1 à T6, D1 à D6) présentant la température de couche barrière momentanément la plus haute n'est pas chargé de pertes de commutation lors de la commutation suivante.

2. Procédé de commande et de régulation selon la revendication 1, **caractérisé en ce qu'**une commutation faisant passer d'un des raccords externes de tension continue - positif ou négatif - au raccord de tension continue médian, c'est-à-dire le branchement médian, s'effectue de manière que tout d'abord le premier contacteur (T1, T4) qui est relié directement au raccord externe de tension continue concerné, est coupé puis, après un temps mort, le troisième contacteur (T5, T6) est enclenché dans le même demi-pont.

3. Procédé de commande et de régulation selon la revendication 1, **caractérisé en ce qu'**un commutation faisant passer d'un des raccords externes de tension continue - positif ou négatif - au raccord de tension continue médian, c'est-à-dire au branchement médian, s'effectue de manière que tout d'abord le second contacteur (T1 et T4) qui est relié directement au raccord de tension externe concerné, est coupé, puis, après un temps mort, le second contacteur (T2, T3) est enclenché dans l'autre demi-pont, et qu'après un autre temps mort, le second contacteur (T2, T3) qui se trouve dans le même demi-pont que le premier contacteur (T1, T4) coupé, est lui-même coupé.

4. Procédé de commande et de régulation selon la revendication 1, **caractérisé en ce qu'**un commutation faisant passer d'un des raccords externes de tension continue - positif ou négatif - au raccord de tension continue médian, c'est-à-dire la branche médiane, s'effectue de manière que tout d'abord le second contacteur (T2 et T3) qui est relié au raccord de tension externe concerné par un premier contacteur (T1, T4), est coupé, puis, après un temps mort, le second contacteur (T2, T3) est enclenché dans l'autre demi-pont,

5. Procédé de commande et de régulation selon une des revendications précédentes, **caractérisé en ce qu'**à partir des ordres d'état de commutation d'une régulation asservie de convertisseur, des intensités de phase et des températures de couches barrières des contacteurs et des diodes (T1 à T6, D1 à D6) sont formés, pour les contacteurs (T1 à T6) des signaux de commande qui prennent en compte les charges thermiques instantanées des contacteurs et des diodes.

6. Procédé de commande et de régulation selon la revendication 5, **caractérisé en ce que** sont comparées entre elles les températures de couche barrière des contacteurs et diodes (T1 à T6, D1 à D6) qui pourraient, en fonction de la tension à moduler et du sens du courant de charge, être chargées de pertes de commutation lors de la prochaine commutation faisant passer à l'état zéro, et l'état zéro suivant le plus proche est sélectionné de manière que celui ou celle des contacteurs et des diodes comparées (T1 à T6, D1 à D6) qui présente la température de couche barrière la plus élevée n'est pas chargé de pertes de commutation lors de la commutation qui suit.

7. Procédé de commande et de régulation selon la revendication 5 ou 6, **caractérisé en ce qu'**un calcul en ligne des pertes de commutation et en ligne, est effectué en fonction des signaux de commande, de la tension du circuit intermédiaire, des intensités de phase, des températures de couche barrière et des approximations de perte des contacteurs et diodes (T1 à T6, D1 à D6).

8. Procédé de commande et de régulation selon la revendication 7, **caractérisé en ce qu'**un calcul en ligne des températures de couche barrière est effectué en fonction des pertes de commutation et en ligne, de la température de l'agent de refroidissement et d'un modèle thermique de convertisseur.

9. Dispositif de commande et de régulation pour un ou plusieurs convertisseurs de courant polyphasé à montage Hartley raccordés à un circuit intermédiaire à tension continue et dans lequel
- entre chaque raccord de tension continue et chaque raccord de charge, deux contacteurs, premiers et seconds (T1, T2, T3, T4) sont montés en série, et antiparallèlement à ceux-ci, sont montées des premières et secondes diodes (D1, D2, D3, D4),
- le point commun de liaison des deux seconds contacteurs (T2, T3) forme le raccord de charge,
- entre chaque point de liaison commun d'un second contacteur (T2, T3) à un premier contacteur (T1, T4) et le branchement médian du circuit intermédiaire à circuit continu, est monté un troisième contacteur (T5, T6) avec antiparallèlement à celui-ci une troisième diode (D5, D6), de sorte que sont formées une première et deuxième lignes de liaison d'un raccord de charge au branchement médian,
**caractérisé en ce que**
- il est prévu un régulateur (2) qui, à partir des ordres d'état de commutation d'un modulateur (1), des intensités de phase et des températures de couche barrière des contacteurs et des diodes (T1 à T6, D1 à D6) forme des signaux de commande pour les contacteurs (T1 à T6), cette formation s'effectuant de manière que
- l'enclenchement du troisième contacteur (T5, T6) s'effectue en fonction de la charge thermique instantanée des contacteurs et diodes (T1 à T6, D1 à D6),
- cet enclenchement du troisième contacteur (T5 à T6) s'effectue de manière que toujours le contacteur avec la diode correspondante (T1 à T6, D1 à D6) présentant la température de couche barrière instantanée la plus élevée, n'est pas chargé lors de la commutation suivante.

10. Dispositif de commande et de régulation selon la revendication 9, **caractérisé en ce qu'**un premier calcul en ligne (3) reçoit à son entrée les signaux de commande destinés aux contacteurs (T1 à T6), les températures de couche barrière des contacteurs et diodes (T1 à T6, D1 à D6), les intensités de phase, la tension intermédiaire et les signaux d'un organe (5) dans lequel des approximations de perte de semi-conducteurs sont stockées, et ce calcul en ligne (3) délivre à sa sortie les pertes de commutation et en ligne calculées

11. Dispositif de commande et de régulation selon la revendication 10, **caractérisé en ce qu'**un second calcul en ligne (3) reçoit à son entrée les signaux du premier calcul en ligne (4), la température de l'agent de refroidissement et les signaux d'un modèle thermique de convertisseur (6), et ce calcul en ligne (4) délivre à sa sortie les températures de couche barrière des contacteurs et des diodes (T1 à T6, D1 à D6).
